# EUROPÄISCHE PATENTSCHRIFT

(11) **EP 0 584 654 B1**
(45) Veröffentlichungstag und Bekanntmachung des Hinweises auf die Patenterteilung: **03.03.1999**
(21) Anmeldenummer: 93112876.3
(22) Anmeldetag: 11.08.1993
(51) Int. Cl.: G01N 21/55

(54) **Verfahren und Vorrichtung zur kontinuierlichen IR-spektroskopischen Analyse hochviskoser Flüssigkeiten mittels abgeschwächter Totalreflexion (ATR)**
Method and device for continuous IR spectroscopic ATR analysis of highly viscous liquids
Méthode et dispositif pour l'analyse en continu par spectroscopie infrarouge à reflexion totale attenuée de liquides à haute viscosité

(30) Priorität: 24.08.1992 DE 4228070
(43) Veröffentlichungstag der Anmeldung: 02.03.1994
(73) Patentinhaber: BAYER AG, 51368 Leverkusen (DE)
(72) Erfinder: Wolf, Udo,Dr., D-47800 Krefeld (DE); Schmid, Helmut,Dr., D-47807 Krefeld (DE); Dörner, Karl-Heinz, D-50259 Pulheim (DE); Kühling, Steffen,Dr., D-47800 Krefeld (DE); Wendt, Eckhard,Dr., D-47800 Krefeld (DE)

(56) Entgegenhaltungen:
- DE-A- 2 411 307
- GB-A- 2 104 681
- GB-A- 2 228 083
- PATENT ABSTRACTS OF JAPAN vol. 6, no. 245 (P-159)(1123) 3. Dezember 1982 & JP-A-57 142 546 (SHIMAZU SEISAKUSHO) 3. September 1982

## Beschreibung

Die Erfindung geht aus von einer Vorrichtung zur kontinuierlichen Analyse hochviskoser Stoffgemische nach dem Prinzip der abgeschwächten Totalreflexion (ATR), bei der ein infraroter Lichtstrahl an gegenüberliegenden Flächen eines ATR-Kristalls hin und her reflektiert wird, der mit dem in einem Meßkanal strömenden Stoffgemisch in Kontakt steht, wobei die dem Meßkanal gegenüberliegende Rückseite der Kristallfläche verspiegelt ist oder unmittelbar hinter dieser Kristallfläche eine Spiegelfläche angeordnet ist. Die Vorrichtung besteht grundsätzlich aus einem Gehäuseoberteil und einem Gehäuseunterteil und einer zwischen dem Gehäuseoberteil und dem Gehäuseunterteil angeordneten Halterung für den ATR-Kristall.

Die Technik der abgeschwächten Totalreflexion (ATR), die auch unter der Bezeichnung "mehrfache innere Reflexion" (MIR) bekannt ist, wird seit vielen Jahren zu Analysezwecken verwendet. Sie basiert auf dem Effekt, daß ein infraroter Lichtstrahl, der unter bestimmten Winkeln durch eine Kristallfläche in den Kristall eintritt, innerhalb dieses Kristalls mehrfach hin und her reflektiert wird und erst am anderen Ende wieder austreten kann. Die Reflexion wird dabei durch Totalreflexion bewirkt; d. h. die Aussenflächen des Kristalls grenzen an ein optisch dünneres Medium an.

Obwohl der Lichtstrahl den Kristall bei den Vielfachreflexionen nicht verläßt, tritt in der Grenzschicht an der Kristalloberfläche eine inhomogene optische Welle in das angrenzende optisch dünnere Medium ein, deren Amplitude exponentiell abklingt. Findet im optisch dünneren Medium Absorption statt, so wird der Lichtstrahl bei jeder Reflexion um einen Bruchteil geschwächt. Das am anderen Ende des Kristalls austretende Licht kann daher, wie das Licht im Falle der konventionellen Spektroskopie durch eine Transmissionszelle in einem Spektrometer analysiert werden. Der Meßeffekt beruht also bei der abgeschwächten Totalreflexion darauf, daß das zu untersuchende Stoffgemisch als optisch dünneres Medium an der Kristalloberfläche vorbeigeleitet wird und das am anderen Ende des Kristalls austretende Licht (Meßlicht) mit Hilfe eines Spektrometers analysiert wird. Einzelheiten über dieses Verfahren sind beispielsweise aus dem Buch von N.J. Harrick, Internal Reflection Spectroscopy, Interscience Publishers John Wiley & Sons, New York, London, Sidney, 1967, bekannt. Weiterhin wird in dem deutschen Patent DE- 3 132 163 eine nach dem ATR-Prinzip arbeitende Multireflexionszelle zur kontinuierlichen Untersuchung chemischer Reaktionen in der flüssigen Phase beschrieben, die bis zu einem Druck von maximal 180 bar eingesetzt werden kann. Bei der online-Analyse oder Qualitätsprüfung, z.B. von Polymerisaten oder Compounds, die durch eine relativ hohe Viskosität ausgezeichnet sind, können jedoch höhere Drücke auftreten, wenn diese hochviskosen Produkte mittels Zahnradpumpen durch Bypassleitungen mit geringem Querschnitt geführt oder mittels eines Schneckenextruders gefördert werden. Dabei sind Drücke bis 400 bar keine Seltenheit. So wird z.B. in der Zeitschrift Kunststoffe 81 (1991), 5, Seite 424-427, beschrieben, daß für Analysezwecke in diesen Druckbereichen herkömmliche Infrarottransmissionszellen mit Fenstern aus Zinkselenit (ZnSe) oder - bei besonders hohen Drücken - auch Diamantfenster verwendet werden. Erhebliche Schwierigkeiten treten auf, wenn hochviskose Produkte (10⁻¹-1 Pas) durch den schmalen Spalt zwischen den Fenstern einer Transmissionszelle gepreßt werden sollen. Meßküvetten mit derart geringen Schichtdicken werden relativ häufig dann verwendet, wenn Spektren in Wellenlängenbereichen aufgenommen werden sollen, in denen eine starke Absorption stattfindet. Würde man in solchen Fällen mit größeren Schichtdicken arbeiten, könnten zwar die strömungstechnischen Probleme verringert werden; dafür könnten aber die betreffenden Absorptionslinien wegen der Kleinheit der Meßsignale nicht mehr für eine quantitative Stoffanalyse herangezogen werden.

Dagegen liegt bei der ATR-Technik die effektiv durchstrahlte Schichtdicke pro Reflexionsstelle in der Größenordnung der Wellenlänge der verwendeten IR-Strahlung. Unabhängig davon kann der Querschnitt des an den Kristall angrenzenden Meßkanals, durch den das zu untersuchende Stoffgemisch strömt, relativ groß gewählt werden, so daß keine strömungstechnischen Probleme (zu hoher Strömungwiderstand) auftreten. Die ATR-Technik ermöglicht also die Untersuchung von charakteristischen Hauptabsorptionslinien des zu analysierenden Produkts bzw. Stoffgemischs, ohne daß der Meßeffekt durch starke Absorption beeinträchtigt wird. Damit wird eine quantitative Stoffanalyse, z. B. die Untersuchung der Zusammensetzung von Polymerblends, ermöglicht.

In JP-A-57 142 546 (siehe auch PATENT ABSTRACTS OF JAPAN vol. 6, no. 245 (P-159)(1123); 3. Dez. 1982) wird ebenfalls eine Vorrichtung zur kontinuierlichen Analyse hochviskoser Stoffgemische beschrieben, bei der ein infraroter Lichtstrahl an gegenüberliegenden Flächen eines Kristalls hin- und her reflektiert wird, der mit dem in einem Meßkanal strömenden Stoffgemisch in Kontakt steht. Dabei wird der infrarote Lichtstrahl an der der Kontaktfläche gegenüberliegenden Seite spiegelnd reflektiert.

Eine ähnlich aufgebaute IR-analytische Meßzelle, die nach dem Prinzip der abgeschwächten Totalreflexion arbeitet, ist auch in GB-A-2228083 beschrieben. Das Meßlicht des ATR-Kristalls wird durch eine stabile Basisplatte (Gehäuseunterteil) abgestützt, um eine hohe Druckfestigkeit zu gewährleisten. Zwischen dem flanschartigen Gehäuseoberteil und dem Gehäuseunterteil ist zur Randabdichtung ein Dichtungsring eingelegt. Die gesamte Oberfläche des ATR-Kristalls steht als Meßfläche mit der zu untersuchenden Flüssigkeit in Kontakt. Die rückseitige Kristalloberfläche ist wie bei der schon beschriebenen Meßzelle verspiegelt.

Der Erfindung liegt die Aufgabe zugrunde, das auf der ATR-Technik beruhende Analysenverfahren weiter zu entwickeln, um hochviskose Flüssigkeiten wie z. B. Polymerschmelzen bei hohem Druck und hohen Temperaturen zu untersuchen und solche Untersuchungen auch zur online-Kontrolle und Überwachung von Produktionsprozessen nutzbar zu machen.

Diese Aufgabe wird ausgehend von der eingangs beschriebenen Vorrichtung erfindungsgemäß dadurch gelöst, daß die Länge und Breite des Meßkanals durch eine Abdeckplatte (13), die zwischen dem Gehäuseoberteil (4) und dem ATR-Kristall (1) angeordnet und gegen diese Teile gepresst ist, derart eingegrenzt ist, daß die Projektion der vom Produkt benetzten Meßfläche des ATR-Kristalls (1) innerhalb der Auflagefläche des ATR-Kristalls (1) in der Halterung (2) liegt. Die vom Produkt benetzte Meßfläche des Kristalls ist also kleiner als die ihr gegenüberliegende Auflagefläche des Kristalls, an der der infrarote Lichtstrahl spiegelnd reflektiert wird. Dadurch wird zwar die zur Analyse ausnutzbare Fläche des ATR-Kristalls verkleinert; jedoch wird am Rand der gegenüberliegenden Fläche außerhalb des Meßkanals Platz für ein Eintrittsfenster zur Einkopplung der IR-Strahlung und ein Austrittsfenster für die Auskopplung des Meßlichts geschaffen, ohne die Druckfestigkeit der gesamten Apparatur in stärkerem Maße zu beeinflussen. Wird der Lichtstrahl auf diese Weise ein- und ausgekoppelt, so kann es von Vorteil sein, auch die unter der Abdeckplatte des ATR-Kristalls liegenden Flächen und ggf. auch die Randfläche, die nicht mit dem Stoffgemisch in Kontakt kommt, reflektierend auszurüsten.

Eine weitere vorteilhafte Maßnahme besteht darin, daß zwischen der Abdeckplatte und der Kristalloberfläche eine Dichtungsfolie angeordnet ist.

Gemäß einer bevorzugten Ausführungsform der Erfindung sind am Meßkanal eine Zuleitung und zwei Ableitungen vorgesehen, wobei die Zuleitung zwischen den beiden Ableitungen angeordnet ist. Dies hat zur Folge, daß sich das zugeführte Stoffgemisch an der Mündung der Zuführungsleitung im Meßkanal in zwei auseinanderströmende Teilströme verzweigt. Vorzugsweise mündet die Zuleitung für das Stoffgemisch am Ort der auf der Kristalloberfläche senkrecht stehenden Mittelachse in den Meßkanal ein, der sich symmetrisch zur Mittelachse nach beiden Seiten erstreckt.

Die Erfindung ermöglicht es, den empfindlichen ATR-Kristall in einem druckfesten Rahmen unterzubringen. Somit lassen sich auch Stoffgemische analysieren, die unter Drücken zwischen 10 bis 500 bar stehen. Im Unterschied zu herkömmlichen ATR-Techniken wird bei dem neuen Verfahren Wert darauf gelegt, daß die zugeführte Meßflüssigkeit sich gleichmäßig über die Kristalloberfläche verteilt und nach beiden Seiten mit annähernd gleicher Strömungsgeschwindigkeit abströmt. Der Stoffstrom teilt sich also an der Mündung der Zuführung im Meßkanal in zwei entgegengesetzt gerichtete Ströme. Dies hat den Vorteil, daß der Stoffstrom keinen bzw. nur einen geringen Impuls parallel zur Oberfläche auf den Kristall überträgt, während der Impuls senkrecht auf die Fläche durch eine druckfeste Halterung aufgefangen werden kann.

Analog zu bei hohen Drücken arbeitenden IR-Transmissionsspektrometern kann die Produktzu- bzw. -abführung mit Hilfe von Extrudern erfolgen. Der sich im Extruder aufbauende hohe Druck gestattet bei Anwendung des erfindungsgemäßen Verfahrens auch bei hochviskosen Stoffen die Aufrechterhaltung der Stoffströme entlang der ATR-Kristallfläche und dient somit der Verhinderung unerwünschter Ablagerungen. Diese Ablagerungen können insbesondere bei Polymerschmelzen ein Problem darstellen. Um das Auftreten von Ablagerungen möglichst zu vermeiden, ist es vorteilhaft, den ATR-Kristall auf einer Temperatur zu halten, die höher ist als die Temperatur des zu analysierenden Stoffgemisches. Eine Temperaturkontrolle des Kristalles erhöht zusätzlich die Meßgenauigkeit des Verfahrens.

Eine weitere konstruktiv vorteilhafte Maßnahme besteht darin, daß die Halterung für den ATR-Kristall aus einem Rahmen besteht, der in dem feststehenden Gehäuse schubladenartig verschiebbar ist. Auf diese Weise kann der Kristall für Reinigungszwecke oder zwecks Austausch einfach und zeitsparend aus- bzw. wieder eingebaut werden. Auch die Aufnahme des genanten Untergrundspektrums, d. h. die Messung ohne Substanz im Meßkanal (Kristall nicht benetzt) kann auf diese Weise vereinfacht werden.

Im folgenden wird die Erfindung anhand einer Zeichnung näher beschrieben.

Es zeigen
- Fig. 1: eine Seitenansicht der Meßzelle
- Fig. 2: ein vereinfachtes Schnittbild A - B (Frontansicht) gemäß Fig. 1 und
- Fig. 3: ein mit Hilfe der Meßzelle gemäß Fig. 1-2 gemessenes ATR-Spektrum einer Polyamid-6-Schmelze.

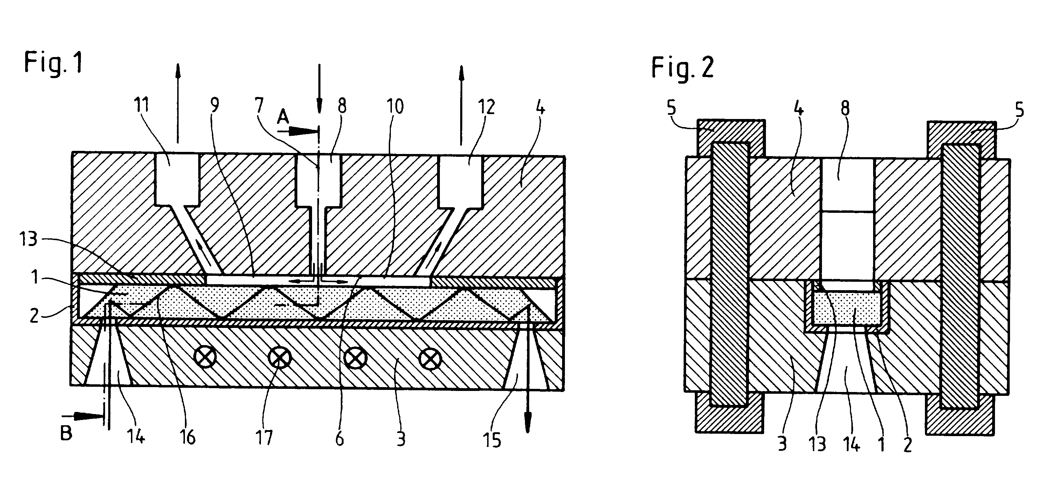

Bei der Meßzelle gemäß Fig. 1 und 2 besteht die Halterung für den ATR-Kristall 1 aus einem Rahmen 2, der zwischen einem Gehäuseunterteil 3 und Gehäuseoberteil 4 angeordnet ist. Die beiden Gehäuseteile 3 und 4 werden mittels der Verschraubung 5 zusammengehalten. Der Rahmen 2 kann nach Art einer Schublade in den Zwischenraum zwischen den beiden Gehäuseteilen eingeführt bzw. herausgenommen werden. Auf diese Weise ist ein leichter Austausch oder auch eine Reinigung des ATR-Kristalls 1 möglich.

Das zu analysierende Stoffgemisch wird durch einen Meßkanal 6 zwischen der Oberseite des ATR-Kristalls 1 und der Unterseite des Gehäuseoberteils 4 gepumpt. Die Zuführung des Stoffsgemischs erfolgt dabei in Höhe der Mittelachse 7 durch die zentral in den Meßkanal 6 einmündende Zuleitung 8. An der Mündung erfolgt eine symmetrische Aufteilung des zugeführten Probenstroms in die beiden Strömungspfade 9 und 10 im Meßkanal 6. Die beiden entgegengesetzt fließenden Teilströme werden dann durch die ebenfalls im Gehäuseoberteil 4 angeordneten Bohrungen und Auslässe 11 und 12 (Ableitungen) abgeführt. Die Ableitungen 11 und 12 sind ebenfalls symmetrisch zur Mittelachse 7 angeordnet. Der Meßkanal 6 erstreckt sich nicht über die gesamte Länge des ATR-Kristalls 1, sondern wird auf beiden Seiten symmetrisch durch eine Abdeckplatte 13 begrenzt. Die vom Produkt benetzte Meßfläche des ATR-Kristalls 1 ist also kleiner als die gegenüberliegende Auflagefläche des ATR-Kristalls auf der Bodenfläche des Rahmens 2; d.h., die Projektion der produktbenetzten Meßfläche liegt innerhalb der Auflagefläche. Zwischen der Abdeckplatte 13 und der Oberfläche des ATR-Kristalls 1 sowie zwischen der Abdeckplatte 13 und dem Gehäuseoberteil 4 können zusätzlich Dichtungsfolien, z.B. aus Polyimid, eingebaut werden.

Die Unterseite, d.h. die dem Meßkanal 6 gegenüberliegende Fläche des ATR-Kristalls 1, ist verspiegelt. Alternativ kann aber auch die Bodenfläche des Rahmens 2 verspiegelt sein. Das zur Messung verwendete IR-Licht wird durch ein Fenster 14 im Gehäuseunterteil 3 in den ATR-Kristall 1 eingekoppelt und nach Vielfachreflexion im ATR-Kristall 1 an der gegenüberliegenden Seite der Meßzelle durch das Fenster 15 im Gehäuseunterteil 3 ausgekoppelt. Die beiden Fenster befinden sich im Bereich der Abdeckplatte 13, d.h. außerhalb des Meßkanals 6. Auf diese Weise ist eine sehr hohe Druckbeständigkeit der Meßzelle gewährleistet. Zusätzlich können auch die beiden Seitenflächen an den Längsseiten des ATR-Kristalls 1 sowie die unter der Abdeckplatte 13 liegenden Flächen verspiegelt werden. Der durch das Fenster 14 eintretende infrarote Lichtstrahl 16 wird im ATR-Kristall 1 vielfach hin und her reflektiert und verläßt danach die Meßzelle wieder durch das Austrittsfenster 15. Bei der Totalreflexion des Lichtstrahls 16 an der Grenzfläche zwischen dem ATR-Kristall 1 und dem Meßkanal 6 wird dem Lichtstrahl aufgrund der Wechselwirkung mit der zu analysierenden Substanz Energie entzogen, so daß die Intensität des Meßlichts gegenüber dem eintretenden IR-Lichtstrahl (Beleuchtungsstrahl) geschwächt ist. Diese Absorption kann dann mit einem konventionellen Infrarotspektrometer, z.B. einem Fourier-Transform-IR-Spektrometer gemessen werden.

Die Strömungspfade 9 und 10 im Meßkanal 6 sowie die Zu- und Ableitungen 8, 11, 12 sind totraumfrei ausgebildet (Vermeidung von scharfen Kanten und Winkeln!), um Ablagerungen der hochviskosen Stoffgemische im Meßkanal 6 zu verhindern. Falls es dennoch in besonderen Fällen zu solchen Ablagerungen kommt, kann der Rahmen 2 mit der Abdeckplatte 13 und dem ATR-Kristall 1 aufgrund der schubladenartigen Konstruktion relativ einfach aus der Meßzelle entfernt werden, um den Kristall zu reinigen.

Für den Hochtemperaturbetrieb der Meßzelle sind im Gehäuseoberteil und -unterteil Heizelemente 17 eingebaut, die mit einem Thermostaten in Verbindung stehen. Der Kristall 1 wird dabei zweckmäßig auf einer Temperatur gehalten, die der des Stoffgemisches entspricht oder darüber liegt. Auf diese Weise können Ablagerungsprozesse vermieden werden, die durch einen Abkühlungsprozeß der durch den Meßkanal 6 fließenden Substanz verursacht werden. Für die Hochtemperaturmessungen sollte ein ATR-Kristall aus einem Halbleitermaterial mit ausreichend großer Bandlücke verwendet werden, da andernfalls durch freie Ladungsträger im ATR-Kristall die Infrarot-Strahlung stark absorbiert wird. Bei niedrigeren Temperaturen wird üblicherweise ein Zinkselenidkristall (ZnSe) verwendet.

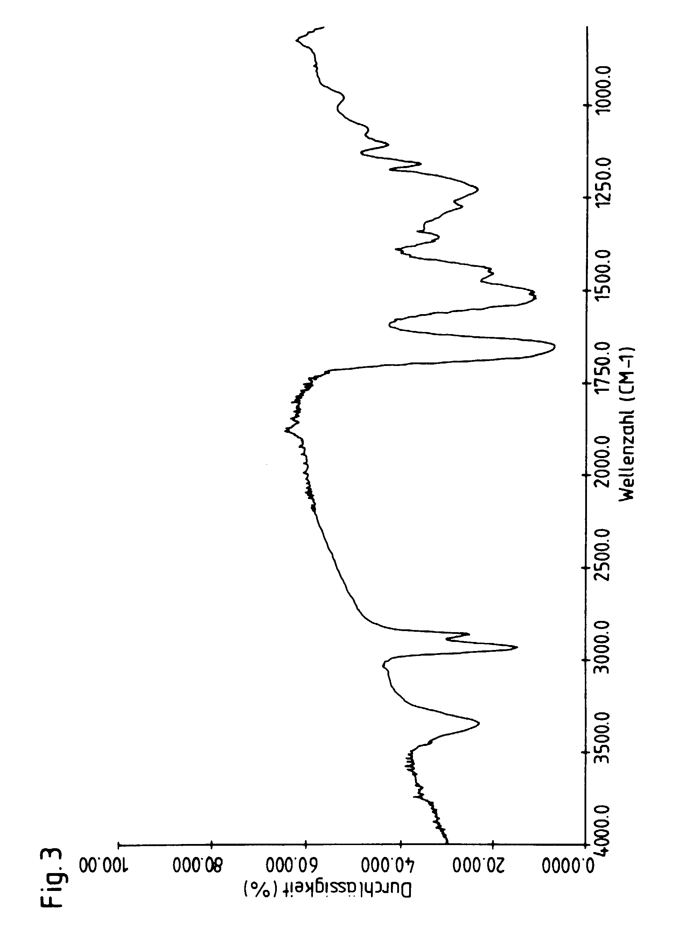

Fig. 3 zeigt ein nach diesem Verfahren und unter Verwendung der erfindungsgemäßen Meßzelle gemessenes ATR-Spektrum einer Polyamid-6-Schmelze. Es wurde ein ZnSe-ATR-Kristall verwendet (Reflexionswinkel 45°, Länge 80 mm, Breite 10 mm, Dicke 3 mm). Die Aufnahme der Spektren erfolgte mit einem Fourier-Transform-IR-Spektrometer. Das Spektrum wurde bei einer Schmelzetemperatur von 280°C in der Zuleitung zur Meßzelle und einer Temperatur der Meßvorrichtung (gemessen unterhalb des ATR-Kristalles) von 300°C aufgenommen.

Zuvor wurde das Untergrundspektrum bei einer Temperatur von 300°C ohne Probe im Meßkanal (ATR-Kristall nicht benetzt) registriert. Hierzu wurde der Kristall mit einem in den verschiebbaren Rahmen eingelegten Blech so abgedeckt, daß zwischen Abdeckblech und ATR-Kristall ein Luftspalt verblieb. Nach Aufnahme des Untergrundspektrums wurde das Abdeckblech entfernt und die Meßzelle mittels eines Einwellenextruders mit einem kontinuierlichen Schmelzestrom bei einem Schmelzedruck von ca. 2 bar mit einer Fördermenge von ca. 1 kg/h beaufschlagt.

## Patentansprüche

1. Vorrichtung zur kontinuierlichen Analyse hochviskoser Stoffgemische nach dem Prinzip der abgeschwächten Totalreflexion (ATR), bei dem ein infraroter Lichtstrahl an gegenüberliegenden Flächen eines ATR-Kristalls (1) hin und her reflektiert wird, der mit dem in einem Meßkanal (6) strömenden Stoffgemisch in Kontakt steht, wobei die dem Meßkanal (6) gegenüberliegende rückseitige Kristalloberfläche verspiegelt ist oder unmittelbar hinter dieser Kristallfläche eine Spiegelfläche angeordnet ist, weiterhin bestehend aus einem Gehäuseoberteil (4) und einem Gehäuseunterteil (3), einer zwischen dem Gehäuseoberteil (4) und dem Gehäuseunterteil (3) angeordneten Halterung (2) für den ATR-Kristall (1), sowie einer Abdeckplatte (13), die zwischen dem Gehäuseoberteil (4) und dem ATR-Kristall (1) angeordnet und gegen diese Teile gepresst ist, und die Länge und Breite des Meßkanals derart eingrenzt, daß die Projektion der vom Produkt benetzten Meßfläche des ATR-Kristalls (1) innerhalb der Auflagefläche des ATR-Kristalls (1) in der Halterung (2) liegt.

2. Vorrichtung nach Anspruch 1, wobei zusätzlich die unter der Abdeckplatte (13) des ATR-Kristalls (1) liegenden Flächen verspiegelt sind.

3. Vorrichtung nach Anspruch 1 - 2, wobei zwischen der Abdeckplatte (13) und der Kristalloberfläche eine Dichtungsfolie angeordnet ist.

4. Vorrichtung nach Anspruch 1 - 3, wobei eine Zuleitung (8) und zwei Ableitungen (11, 12) vorgesehen sind und die Zuleitung (8) zwischen den beiden Ableitungen (11, 12) angeordnet ist, so daß sich das zugeführte Stoffgemisch an der Mündung der Zuführungsleitung (8) im Meßkanal (6) in zwei auseinanderströmende Teilströme verzweigt.

5. Vorrichtung nach Anspruch 1 - 4, wobei die Zuleitung (8) am Ort der auf der Kristalloberfläche senkrecht stehenden Mittelachse (7) in den Meßkanal (6) einmündet, der sich symmetrisch zu beiden Seiten der Mittelachse (7) erstreckt.

6. Vorrichtung nach Anspruch 1 - 5, wobei die Halterung für den ATR-Kristall (1) aus einem Rahmen (2) besteht, der in einem feststehenden Gehäuse (3, 4) schubladenartig verschiebbar ist.

7. Vorrichtung nach Anspruch 1 - 6, wobei gegenüber der rückseitigen Kristallfläche außerhalb des Meßkanals (6) im Gehäuse (3) ein Eintrittsfenster (14) für die Einkopplung der beleuchteten IR-Strahlung und ein Austrittsfenster (15) für die Auskopplung des Meßlichts angeordnet ist.

8. Vorrichtung nach Anspruch 1 - 7, wobei die Seitenflächen des Kristalls ebenfalls verspiegelt sind oder hinter diesen Seitenflächen zusätzliche Spiegelflächen angeordnet sind.

## Claims

1. Device for the continuous analysis of highly viscous mixtures of substances using the principle of attenuated total reflection (ATR), in which an infrared light beam is reflected to and fro on opposite faces of an ATR crystal (1) which is in contact with the mixture of substances flowing in a measurement channel (6), the rear crystal surface, on the opposite side from the measurement channel (6) being mirrored or a mirror face being arranged directly behind this crystal face, consisting of an upper housing part (4) and a lower housing part (3), furthermore a holder (2) which is arranged between the upper housing part (4) and the lower housing part (3) and is intended to hold the ATR crystal (1), as well as a cover plate (13) which is arranged between the upper housing part (4) and the ATR crystal (1) and is pressed against these parts and restricts the length and width of the measurement channel in such a way that the projection of the measurement face, wetted with the product, of the ATR crystal (1) lies inside the bearing face of the ATR crystal (1) in the holder (2).

2. Device according to Claim 1, the faces of the ATR crystal (1) lying under the cover plate (13) also being mirrored.

3. Device according to Claim 1-2, a sealing sheet being arranged between the cover plate (13) and the crystal surface.

4. Device according to Claim 1-3, an input line (8) and two output lines (11, 12) being provided, and the input line (8) being arranged between the two output lines (11, 12), so that the mixture of substances supplied at the opening of the feed line (8) in the measurement channel (6) branches into two divergent elementary streams.

5. Device according to Claim 1-4, the input line (8) opening, at the site of the mid-axis (7) perpendicular to the crystal surface, into the measurement channel (6) which extends symmetrically with respect to the two sides of the mid-axis (7).

6. Device according to Claim 1-5, the holder for the ATR crystal (1) consisting of a frame (2) which can be moved in the manner of a drawer in a fixed housing (3, 4).

7. Device according to Claim 1-6, an entry window (14), for introducing the illuminated IR radiation, and an exit window (15) for extracting the measurement light, being arranged against the rear crystal face outside the measurement channel (6) in the housing (3).

8. Device according to Claim 1-7, the side faces of the crystal also being mirrored, or extra mirror faces being arranged behind these side faces.

## Revendications

1. Dispositif pour l'analyse continue de mélanges de substances très visqueux selon le principe de la réflexion totale atténuée (ATR) dans lequel un faisceau lumineux infrarouge est réfléchi dans un sens et dans l'autre sur les surfaces opposées d'un cristal ATR (1) qui est en contact avec le mélange de substances qui s'écoule dans un canal de mesure (6), où la surface dorsale du cristal opposée au canal de mesure (6) est rendue réfléchissante ou bien une surface réfléchissante est disposée juste derrière cette surface du cristal, consistant en outre en une partie supérieure de boîtier (4) et en une partie inférieure de boîtier (3), en un support (2) pour le cristal ATR (1) disposé entre la partie supérieure de boîtier (4) et la partie inférieure de boîtier (3), ainsi qu'en plaque de couverture (13), qui est disposée entre la partie supérieure de boîtier (4) et le cristal ATR (1) et qui est pressée contre ces parties, et qui limite la longueur et la largeur du canal de mesure de telle manière que la projection de la surface de mesure du cristal ATR (1) mouillée par le produit est située à l'intérieur de la surface d'appui du cristal ATR (1) dans le support (2).

2. Dispositif selon la revendication 1 dans lequel, en outre, les surfaces situées sous la plaque de couverture (13) du cristal ATR (1) sont rendues réfléchissantes.

3. Dispositif selon les revendications 1 et 2, dans lequel une feuille d'étanchéité est disposée entre la plaque de couverture (13) et la surface du cristal.

4. Dispositif selon les revendications 1 à 3 dans lequel une conduite d'entrée (8) et deux conduites de sortie (11, 12) sont prévues et la conduite d'entrée (8) est disposée entre les deux conduites de sortie (11, 12) de sorte que le mélange de substances introduit se divise au niveau de l'embouchure de la conduite d'entrée (8) dans le canal de mesure (6) en deux courants partiels qui s'écoulent de manière opposée l'un à l'autre.

5. Dispositif selon les revendications 1 à 4 dans lequel la conduite d'entrée (8) débouche au niveau de l'axe (7) perpendiculaire à la surface du cristal dans le canal de mesure (6) qui s'étend symétriquement des deux côtés de l'axe (7).

6. Dispositif selon les revendications 1 à 5 dans lequel le support pour le cristal ATR (1) consiste en un cadre (2) qui peut coulisser à la manière d'un tiroir dans un boîtier fixe (3, 4).

7. Dispositif selon les revendications 1 à 6 dans lequel une fenêtre d'entrée (14) pour le couplage d'entrée du faisceau IR irradié et une fenêtre de sortie (15) pour le couplage de sortie de la lumière de mesure sont disposées en face de la surface dorsale du cristal à l'extérieur du canal de mesure (6) dans le boîtier (3).

8. Dispositif selon les revendications 1 à 7 dans lequel les surfaces latérales du cristal sont elles aussi rendues réfléchissantes ou bien des surfaces réfléchissantes supplémentaires sont disposées derrière ces surfaces latérales.
